# EUROPEAN PATENT SPECIFICATION

(11) **EP 2 183 502 B1**
(45) Date of publication and mention of the grant of the patent: **21.09.2011**
(21) Application number: 08790072.6
(22) Date of filing: 18.07.2008
(51) Int. Cl.: F16D 65/18

(54) **ACTUATOR FOR PARKING BRAKE**
BETÄTIGER FÜR STANDBREMSE
DISPOSITIF DE COMMANDE POUR FREIN DE PARKING

(30) Priority: 02.08.2007 IT MI20071599
(43) Date of publication of application: 12.05.2010
(73) Proprietor: Freni Brembo S.p.A., 24035 Curno (Bergamo) (IT)
(72) Inventor: CANOVA, Walter, I-24010 Sorisole Bergamo (IT); TERUZZI, Andrea, I-24061 Albano S. Alessandro Bergamo (IT); RENZI, Davide, I-23841 Annone Brianza Lecco (IT)
(74) Representative: Crippa, Paolo Ernesto
(86) International application number: PCT/IT2008/000491
(87) International publication number: WO 2009/016676

(56) References cited:
- EP-A- 1 757 836
- WO-A-2006/056598
- DE-A1- 10 353 695
- DE-U1- 8 900 277
- FR-A- 2 820 793

## Description

The object of the present invention is an actuator for parking brake.

Actuators are known to be housed within a caliper generally operating also as a service caliper of a hydraulic type. Documents EP1757836A1, FR2820793A1 and US5060765A1 show actuators of this type. When used as a service brake, a piston housed in the caliper pushes a corresponding pad against a disc associated to the vehicle wheel, following the pressure rise of the liquid in the braking circuit. When used as a parking brake, the same piston can be further operated by mechanical means comprising, for example, a driving lever rotating around a drive axle following the drive imparted on a pedal or lever inside the interior compartment. The mechanical means operating the piston can comprise two relatively translatable washers along the drive axle, upon rotation of the driving lever.

Such actuators are not without drawbacks. In fact, it is known to provide a cage which houses the two washers. In some cases, the cage radially extends outwardly, then axially stopping on the housing by the insertion of holding rings. In other cases, the cage is partially inwardly folded by a press, to axially stop on the first washer.

In both cases, both the cage manufacturing, and the assembling thereof, turn out to be quite complex, due both to the number of components required, and the sequence and number of steps. Furthermore, the use of complex equipments is required both during insertion of the holding rings, and when folding the cage in the assembling step of the same.

Object of the present invention is to devise and provide an actuator for parking brakes which allows at least partially obviating the drawbacks reported herein above with reference to the prior art.

Particularly, task of the present invention is to provide an actuator for parking brakes which allows simplifying and speeding up the assembling step, particularly of the cage, without compromising the functional and strength characteristic of the actuator, and without needing special equipment.

Such object and such tasks are achieved by an actuator for parking brake in accordance with claim 1.

The further claims correspond to possible embodiments of the actuator.

Further characteristics and the advantages of the actuator according to the invention will be more clearly understood from the description set forth below of preferred exemplary embodiments, which are given by way of non-limiting example, with reference to the annexed Figures, in which:
- Fig. 1 illustrates a perspective, schematic view with separated parts of an actuator for parking brake according to the invention;

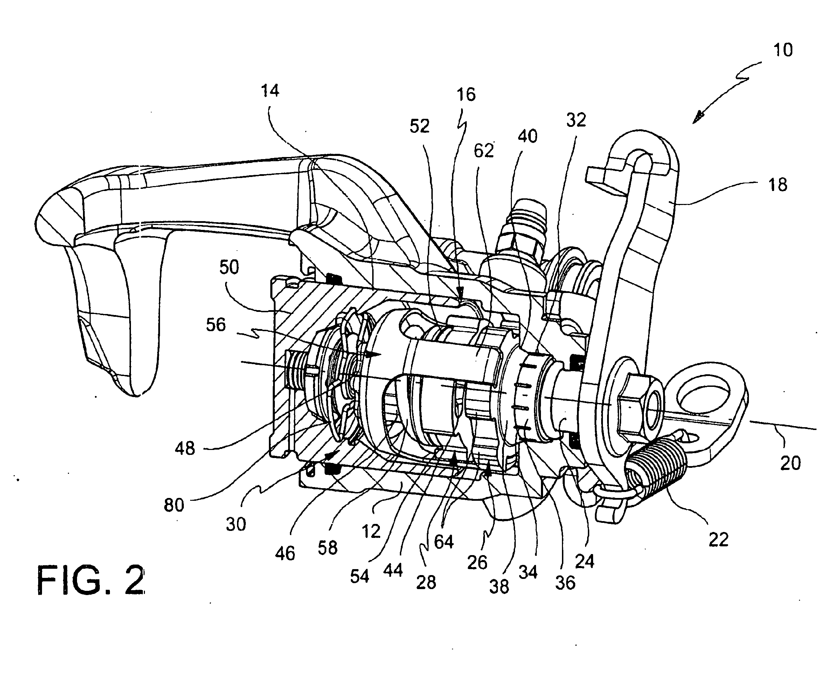

- Fig. 2 illustrates a partially sectional, perspective, schematic view of the actuator of Fig. 1;

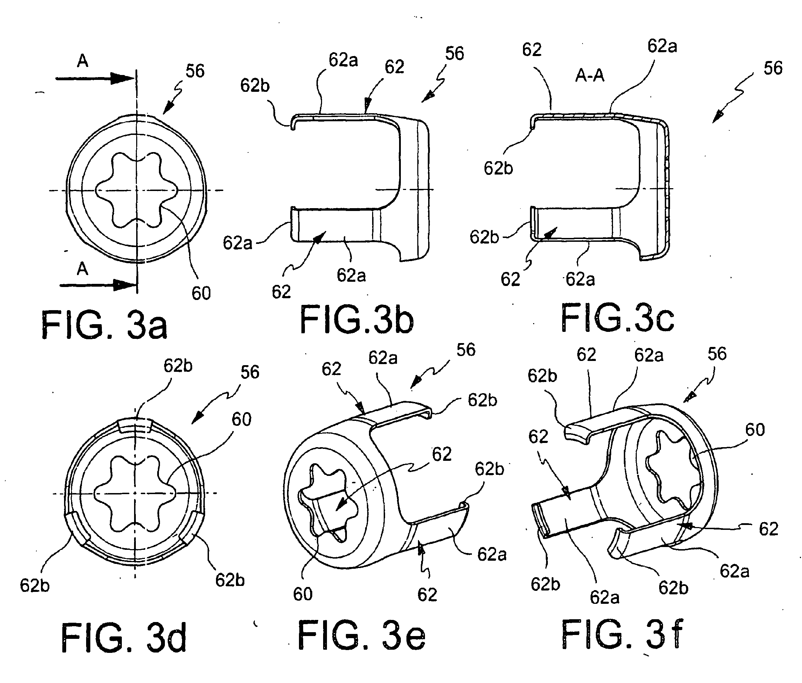

- Figs. 3a-3f illustrate schematic views of a detail of the actuator in Fig. 1, respectively front, side, sectional views according to the line A-A of Fig. 3a, rear and perspective views according two different angles;
- Figs. 4a-4e illustrate schematic views of a further detail of the actuator in Fig. 1, respectively front, side, rear views, an enlarged detail A of Fig. 4c, and perspective view;

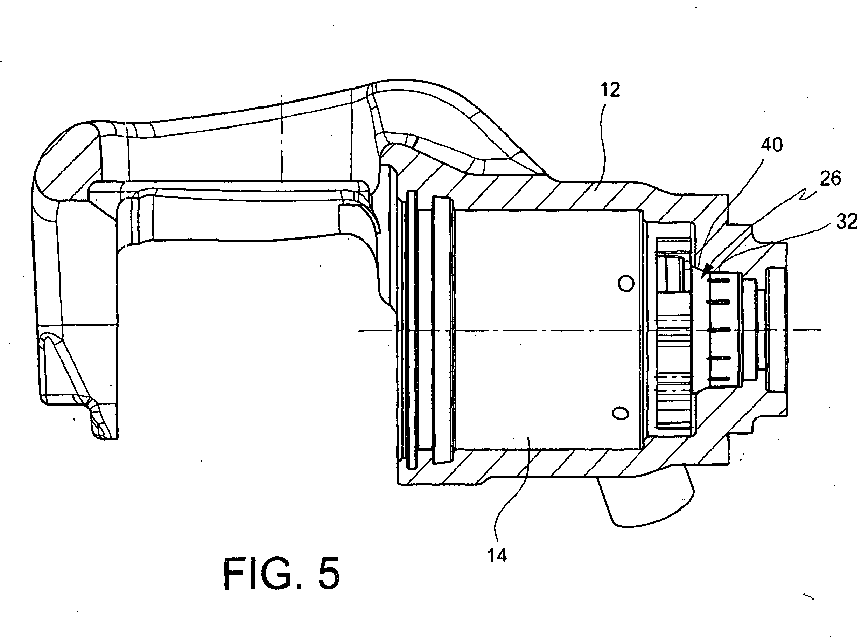

- Fig. 5 illustrates a schematic, sectional, side view of the actuator in Fig. 1 in which some components have been omitted;

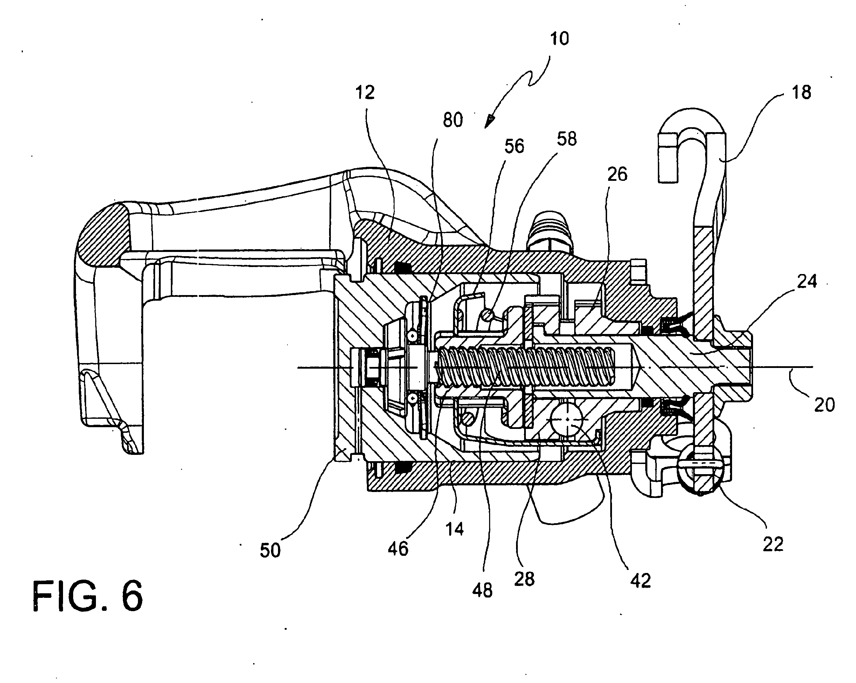

- Fig. 6 illustrates a schematic, sectional, side view of the actuator in Fig. 1;
- Figs. 7a-7d illustrate perspective, schematic views of some components of the actuator in Fig. 1 in a sequence of relative assembling steps;

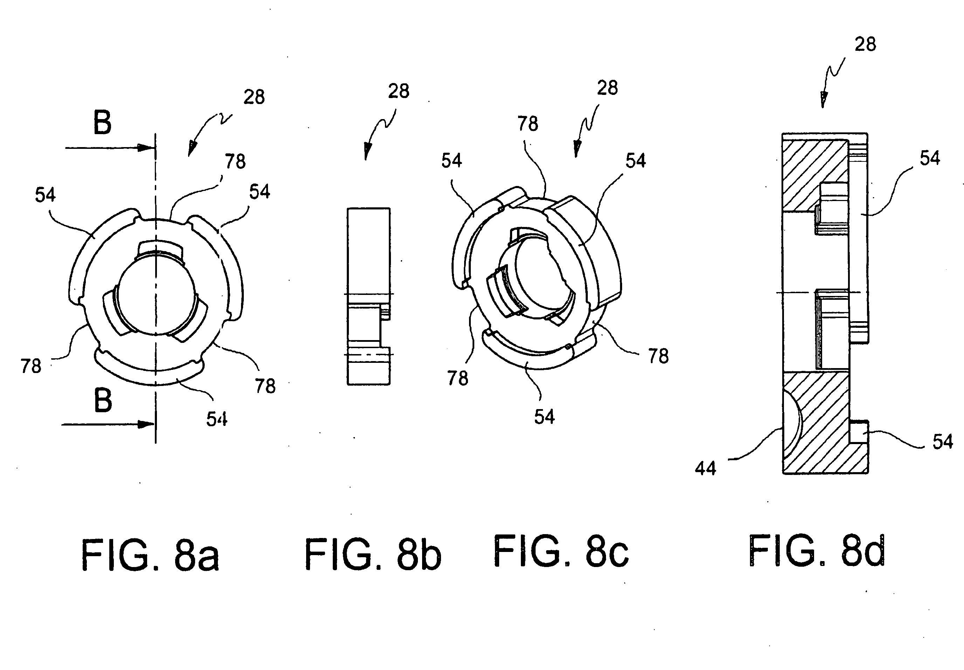

- Figs. 8a-8d illustrate schematic views of a further detail of the actuator in Fig. 1, respectively front, side, perspective, and enlarged sectional views according to the line B-B of Fig. 8a;

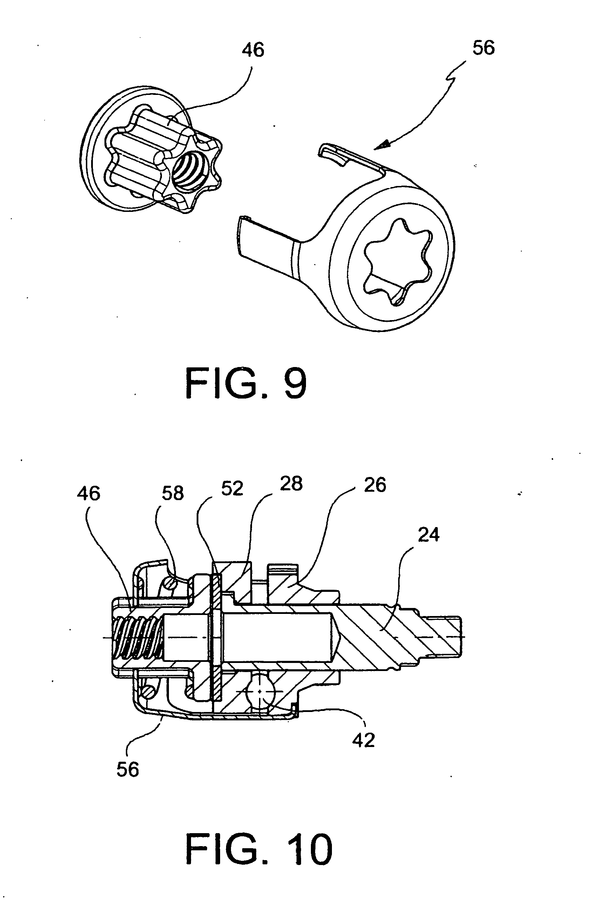

- Fig. 9 illustrates a perspective, schematic view of the assembling step of two components of the actuator in Fig. 1;
- Fig. 10 illustrates a schematic, sectional, side view of some components of the actuator in Fig. 1.

With reference to the above-mentioned Figures, an actuator for parking brake according to the invention has been generally indicated with 10. Particularly, this is a disc brake.

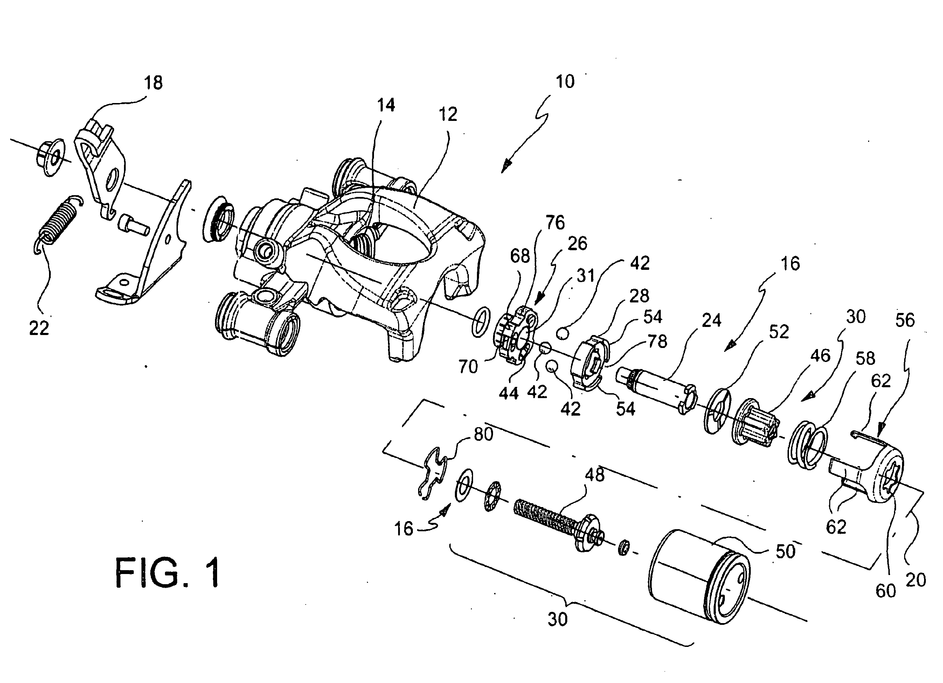

With reference to Fig. 1, the actuator comprises a housing 12 defining a recess 14. In accordance with a possible embodiment, the housing is provided by means of the body of a disc brake caliper, preferably also operating as a service brake.

According to a possible embodiment, the actuator 10 comprises driving means 16 operatively interposed between a driving member 18 and a non-shown braking member. In the case of a disc brake, the braking member consists, for example, in a pad housed in the caliper.

According to what has been illustrated in the Figures, the driving member consists, for example, in a lever rotating around a drive axle 20. Such lever has an end adapted to be secured, for example, to a drive cable actuatable by a pedal or hand lever inside the internal compartment. Elastic return means 22 associated to the lever opposite end are further provided.

In accordance with a possible embodiment, the driving means are at least partially housed within the recess, and comprise an actuating shaft 24, a first washer 26, a second washer 28, and a pushing device 30. Advantageously, the second washer is operatively associated to the driving member, and is translatable relative to the first washer along the drive axle, following the driving member action and the interaction with the first washer.

In accordance with a possible embodiment illustrated by way of example in the Figures, the actuating shaft 24 is connected to the driving member 18 so as to rotate around the drive axle 20 upon rotation of the same driving member. Furthermore, the actuating shaft 24 axially passes through the first washer, and is connected to the second washer 28 so as to rotationally pulling it around the drive axle 20. In accordance with a possible embodiment, the first washer has an axial passage 31 which is adapted to receive the actuating shaft.

According to a possible embodiment, illustrated by way of example in the annexed drawings, the first washer 26 is constrained to the housing 12, preferably both rotationally and translationally along the drive axle. Advantageously, the first washer 26 partially inserts in a housing seat 32 which is co-axial with the actuating shaft 24. Particularly, the first washer 26 comprises ribs 34 adapted to engage in the wall defining the seat 32. In accordance with a possible embodiment, the ribs 34 extend according to a parallel direction to the drive axle, and are distributed along a first washer cylindrical portion 36 which is adapted to insert within the seat 32. Advantageously, the cylindrical portion 36 defines an axial and rotational constraint of the first washer on the housing.

In accordance with a possible embodiment, the first washer 26 comprises a conical portion 38 abutting against a respective conical portion 40 of the seat 32. Advantageously, the conical portion 38 defines a rotational constraint of the first washer on the housing.

According to a possible embodiment illustrated by way of example, the interaction between first washer 26 and second washer 28 is carried out by means of rolling bodies, particularly, spherical members 42 interposed between the two washers, and housed in respective rolling seats 44 obtained in the mutually facing surfaces of the two washers. The shape of such rolling seats is such as to create a translational motion of the two washers mutually driving apart along the drive axle upon rotation of the driving member in order to actuate the actuator. With particular reference to the illustrated embodiment, the rolling seats are so manufactured as to move the second washer away from the first washer along the drive axle, upon rotation of the same second washer caused by driving member and actuating shaft rotation. Therefore, in this embodiment the first washer defines a reaction washer.

In accordance with a possible embodiment, the pushing device is operatively associated to the second washer, and is translatable along the drive axle following the relative movement of the two washers. Furthermore, the pushing device is operatively associated to the braking member, particularly to the pad.

In accordance with a possible embodiment, the pushing device comprises a bush 46 coupled to a threaded pin 48 and a piston 50. The bush/threaded pin assembly represents a generally integrally mobile body during the braking step, when it acts on the piston by pushing it against the braking member, upon the thrust exerted by the second washer. Advantageously, antifriction means, particularly a Teflon-coated fifth wheel 52, is sandwiched between second washer 28 and pushing device, particularly the bush 46. In this case, the second washer 28 can advantageously comprise holding walls 54 peripherally arranged in order to receive the fifth wheel.

Advantageously, the actuator according to the present invention further comprises a cage 56 adapted to at least partially house first washer 26, second washer 28, and a pushing device portion, particularly a bush 46 and threaded pin 48 portion.

The cage is adapted to define an abutment for return means 58 operating, for example, on second washer and pushing device. In the case illustrated in the Figures, the return means are of an elastic type, for example, consisting in a coil spring.

In accordance with a possible embodiment, the cage laterally and frontally wraps first washer 26, second washer 28, and a portion of the pushing device, and has an opening 60 which is passed through by a pushing device portion, particularly by the bush/threaded pin assembly. Advantageously, opening 60 and bush 46 define an anti-rotational coupling which is implemented by a shape-coupling, for example, consisting in a lobed shape for opening and bush.

In accordance with a possible embodiment, the cage 56 is cup-shaped, adapted to receive return means 58, at least one portion of the pushing device 30, second washer 28, and first washer 26. The opening 60 is obtained on the basis of this cup shape.

In the illustrated example, in which the first washer defines a reaction washer constrained to the housing, the cage is constrained to the first washer. Preferably, the coupling between cage and first washer defines an anti-rotational constraint and a constraint to the translation of the cage moving away from the first washer.

In accordance with a possible embodiment, the cage comprises snap-coupling portions on the first washer. Such snap-coupling portions are adapted to allow the coupling between cage and first washer by approaching along the drive axle and relative rotation therebetween around said axle.

Advantageously, the cage 56 can comprise at least one tongue 62, preferably at least two tongues. In the illustrated example, three tongues are provided, preferably uniformly distributed around the drive axle.

In accordance with a possible embodiment, a tongue comprises a first portion 62a extending along the drive axle 20, in the assembled configuration of the actuator. The first portion 62a is adapted to essentially elastically deform when coupling with the first washer following the interaction with a respective deformation portion 64 of the first washer.

Advantageously, a tongue 62 further comprises a second portion 62b extending in an essentially transversal direction to the drive axle, in the assembled configuration of the actuator. The second portion 62b is arranged at the free end of the tongue, particularly, it is defined by said free end pre-folded towards the drive axle, that is, inwardly the same cage. In other terms, the tongue second portion is adapted to abut against a respective abutment surface 66 of the first washer.

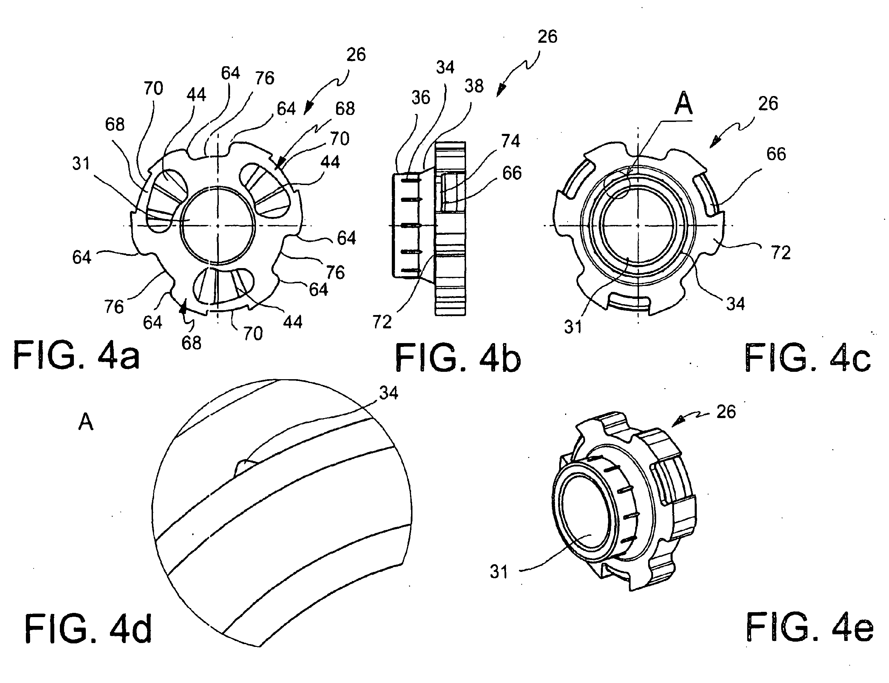

In accordance with a possible embodiment, a deformation portion of the first washer comprises a ramp extending essentially in the tangential direction relative to the drive axle 20. By the term "ramp", a portion is meant which has a radial dimension increasing in the tangential direction in order to deform a relative tongue (Figs. 4a-4e). As a result, according to the illustrated embodiment, the tongue 62 first portion 62a deforms by the relative rotation of the cage and the first washer around the drive axle.

According to a possible embodiment, such ramp can be implemented by at least one side surface portion of a first washer tooth 68. If present, a tooth 68 also defines an abutment surface 66 for the tongue second portion.

In accordance with a possible embodiment, as illustrated for example in the Figures, a tooth 68 comprises two ramps 64 arranged on opposite sides of the tooth relative to a radius perpendicular to the drive axle passing through the same tooth middle point. Both ramps are adapted to elastically deform a respective tongue during the relative rotation of cage and first washer.

According to a possible embodiment, the first washer has at least one seat 70 adapted to receive the tongue 62 first portion 62a. According to the example illustrated in the Figures, the tongue 62 first portion 62a is received in the seat 70 following the at least partial elastic return of the same tongue in the assembling step on the first washer. Advantageously, the seat 70 is defined in the tangential direction in order to prevent the relative rotation of cage and first washer around the drive axle 20.

In accordance with a possible embodiment, the first washer abutment surface 66 is lowered relative to a base surface 72 of the first washer, thus defining a housing 74 to receive the tongue second portion. If the seat 70 is provided, the housing 74 is arranged in order to extend such seat in the transversal direction thereto.

In accordance with a possible embodiment, the first washer comprises at least one depression 76 to allow the tongue passage along the drive axle 20 when inserting the cage on the first washer. Advantageously, the depression is defined on at least one side by the ramp 64. Where provided, the depression 76 is defined on at least one side by a tooth.

The depression 76 dimension is, for example, such as to allow the cage insertion on the first washer according to an axial direction (drive axle), that is, it is adapted to receive the tongue second portion 62b. In accordance with the illustrated embodiment, in which both the seat 70 and the depression 76 are provided, the depression 76 radial depth is higher than the seat 70.

Tn accordance with a possible embodiment, the second washer 28 comprises at least one depression 78 to allow the tongue passage along the drive axle when inserting the cage on the first washer.

According to a possible embodiment illustrated by way of example in the annexed Figures, the tongue second portion is adapted to abut against the first washer respective abutment surface upon relative rotation of first washer and cage, and the at least partial elastic return of said tongue.

In accordance with the illustrated embodiment in which three tongues are provided, the first washer 26 advantageously comprises at least three teeth 68 tangentially distributed relative to the first washer and interspersed with three depressions 76. In the case of a different number of tongues, at least a similar number of teeth and depressions of the first washer will be advantageously provided. The depressions dimension is, for example, such as to allow the cage insertion on the first washer according to an axial direction (drive axle), that is, it is adapted to allow the passage of a corresponding tongue second portion 62b.

If there is a constraint to the relative rotation of cage and first washer around the drive axle, each tooth can comprise for example a seat 70 adapted to receive the first portion of a respective tongue following the at least partial elastic return of the same.

In accordance with a possible embodiment, the first washer 26 rolling seats 44 which receive the spherical members 42 are arranged at the teeth 68. In accordance with an embodiment illustrated by way of example in the annexed Figures, three rolling seats 44 and as many spherical members 42 are provided. In the case where three teeth are provided, each rolling seat corresponds to one tooth.

In accordance with a possible embodiment illustrated by way of example in the Figures, where three tongues are provided, the second washer 28 advantageously comprises at least three depressions 78. In the case of a different number of tongues, at least a similar number of depressions for the second washer will be advantageously provided. The depressions dimension is, for example, such as to allow the cage insertion on the second washer according to an axial direction (drive axle), that is, it is adapted to allow the passage of a corresponding tongue second portion 62b.

In accordance with a possible embodiment, the maximum radial dimension of the second washer it such as to allow the rotation thereof within the cage 56.

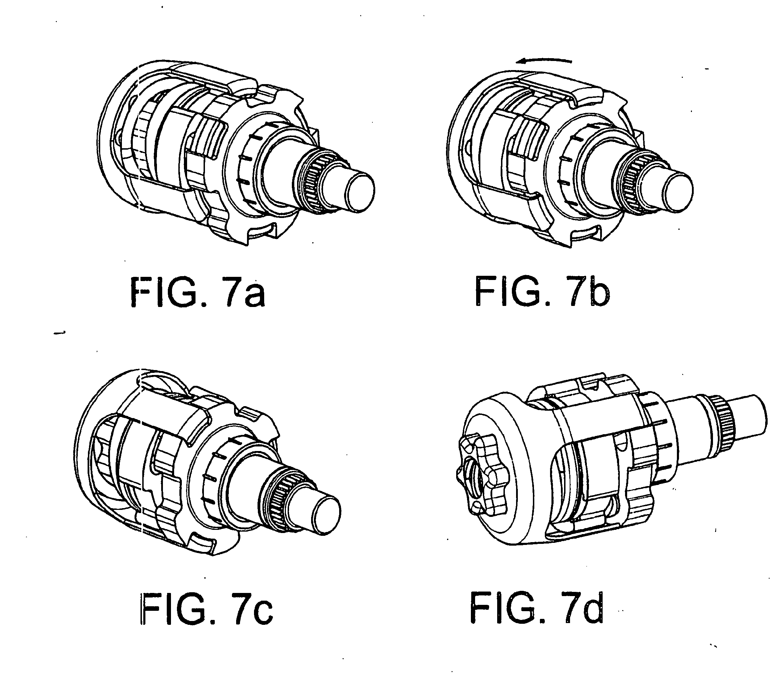

The assembling of an actuator for disc brake as previously described is described below, with reference to the annexed Figures, and particularly to the Figs. 7a-7d.

An independent assembly is pre-arranged, which is composed of cage 56, bush 46, return means 58, fifth wheel 52, second washer 28 associated to the actuating shaft 24, spherical members 42, and first washer 26. The above-mentioned members are inserted in the cage in the sequence above indicated, so that the tongues surround and wrap them. Particularly, the depressions 76 and 78 of the first and second washer are at least partially angularly aligned to allow the cage insertion on the first and second washer according to the drive axle direction.

The cage 56 is relatively inserted on the second washer and on the first washer in the axial direction until the second portion of the tongues opens out beyond the base surface 72 of the same first washer.

Then the cage and the first washer relatively rotate therebetween so that the cage tongues, and particularly the first portion, interact with the ramp 64, thus elastically outwardly deforming. Where two deformation portions are provided for each tongue (ramps beside each depression), the rotation can occur indifferently in one or the other direction.

At the end of the relative rotation between cage and first washer, the tongues elastically return in an at least partial manner inwardly relative to the seats 70. The first portion 62a of the tongues is thus housed in a respective seat 70, while the second portion 62b abuts against a respective abutment surface 66, preferably within the housing 74.

In the relative insertion of the cage on the first washer, the return means 58, particularly implemented by a coil spring, are pre-loaded in order to keep the two moved nearer washers with interposition of the spherical members 42.

The so-obtained assembly is then inserted in the recess 14 of the housing 12 (body caliper) by pushing the first washer 26 in the seat 32. Finally, the threaded pin is associated to the piston 50, preferably with interposition of an elastic member 80, and subsequently screwed to the bush 46, thus obtaining an assembly which is adapted to allow the recovery of the piston stroke due to the pad wear.

The mode of use of the actuator described above is described below, with particular reference to the annexed Figures. During the parking braking step, the diver actuates a push button or a lever within the internal compartment which, through a non-shown cable, makes the lever 18 (driving member) to rotate around the drive axle 20. The lever 18 integrally rotates with the actuating shaft 24 and with the second washer 28, while the first washer 26 is fixed on the housing 12. The interaction with the spherical members 42 and the first washer 26 causes the second washer 28 translation and move away from the first washer 26. As a result, bush 46, threaded pin 48, and piston 50 act on the pad, pushing it towards the disc. In the case of floating calipers, such movement causes a translation by reaction of the caliper, with the resulting approaching of the opposite pad to the disc.

By cancelling the torque applied on the lever, the elastic return means 22 bring the lever 18 back to the rest position, while the return means 58 bring the bush and the second washer back to the rest position.

From what has been set forth above, it shall be appreciated how providing an actuator as previously described allows satisfying the above-mentioned need to simplify the assembling thereof, without compromising the functionality of the same.

Particularly, the provision of a snap-coupling makes the assembling intuitive, thus eliminating the need for particular structures, and ensures a high resistance, both of the axial and rotational constraint.

It shall be apparent that variations and/or additions to what has been described and illustrated above can be provided.

Alternatively to what has been represented in the annexed Figures, it is possible to generally provide that the cage comprises at least one tongue having a first portion extending along the drive axle, in the assembled configuration of the actuator, in which such first portion is adapted to essentially elastically deform during insertion on the first washer following the interaction with a respective deformation portion of the first washer. In other terms, the axial constraint can be carried out in a different manner compared to what has been previously described.

In accordance with a possible embodiment, the cage can comprise snap-coupling portions on the first washer which are adapted to allow the coupling between cage and first washer with approaching along the drive axle. In accordance with a further embodiment, the first washer deformation portion can comprise a ramp extending essentially in the axial direction relative to the drive axle. Also in this case, it can be provided that the first washer has, at such ramp, a seat adapted to receive the tongue first portion following the at least partial elastic return of the same tongue. Therefore the seat, defined in the tangential direction, can prevent the relative rotation of cage and first washer around the drive axle. In accordance with a possible embodiment, also in this case the first washer abutment surface can be lowered relative to a first washer base surface, thus defining a housing to receive the tongue second portion. Such housing is arranged as a seat extension, in the transversal direction thereto.

According to such embodiment, the tongue second portion is adapted to abut against a first washer respective abutment surface following the at least partial elastic return of the same tongue. In other terms, the cage snap-coupling on the first washer occurs following the relative translation of cage and washer along the drive axle.

In accordance with a possible further embodiment, the present invention further relates to an actuator for parking brake comprising a housing 12 defining a recess 14, driving means 16 operatively interposed between a driving member 18 and a braking member, not shown; in which the driving means 16 are at least partially housed in the recess 14 and comprise a first washer 26 and a second washer 28 translatable along a drive axle 20 relative to the first washer 26, and a pushing device 30 translatable along the drive axle 20. The pushing device is operatively associated to the braking member. The actuator further comprises a cage 56 adapted to at least partially house first washer 26, second washer 28, and a portion of the pushing device 30, and to define an abutment for return means 58. Advantageously, cage 56 and first washer 26 define a bayonet-coupling adapted to generate a constraint to the relative moving away along the drive axle 20. In other terms, the tongue second portion is adapted to abut against the relative first washer abutment surface upon relative rotation of first washer and cage.

In accordance with a possible embodiment, the cage comprises at least one portion which is pre-folded along an essentially transversal direction to the drive axle 20, and adapted to abut against a first washer 26 respective abutment surface 66. Furthermore, the first washer 26 comprises at least one depression 76 to allow the cage insertion on the first washer along the drive axle, and at least one tooth 68 adapted to define the abutment surface 66 upon relative rotation of cage and first washer axially inserted one on the other.

In accordance with a possible embodiment of the above-mentioned actuator, cage and first washer define a snap-coupling adapted to generate at least one constraint to the relative rotation of cage and first washer around the drive axle. Preferably, such snap-connection comprises at least one cage tongue 62 having a first portion 62a extending along the drive axle, in the assembled configuration of the actuator. The tongue 62 first portion 62a is adapted to essentially elastically deform during the relative rotation of cage and first washer following the interaction with a first washer respective deformation portion 64.

To the embodiments of the device described above, those of ordinary sills in the art, in order to meet contingent, specific, needs, will be able to make modifications, adaptation, and replacements of elements with functionally equivalent others, without for this departing from the scope of the following claims. Each of the characteristic described as belonging to a possible embodiment can be implemented independently from the other embodiments described.

## Claims

1. Actuator (10) for parking brake comprising:
- a housing (12) defining a recess (14);
- driving means (16) operatively interposed between a driving member (18) and a braking member, wherein said driving means (16) are at least partially housed in said recess (12), and comprise a first washer (26), a second washer (28) translatable relative to said first washer (26) along a drive axle (20) upon the action of said driving member (18), and a pushing device (30) translatable along said drive axle (20) upon the relative movement of said two washers, said pushing device (30) being operatively associated to said braking member;
- a cage (56) adapted to at least partially house the first washer (26), the second washer (28), and a portion of the pushing device (30), and to define an abutment for return means (58), wherein said cage (56) comprises snap-coupling portions on said first washer (26),
wherein said cage (56) comprises at least one tongue (62) comprising:
- a first portion (62a) extending along said drive axle (20), in the assembled configuration of said actuator, said first portion (62a) being adapted to essentially elastically deform when coupling with the first washer (26)
- a second portion (62b) extending in the essentially transversal direction to said drive axle (20),
**characterized in that**
said first portion (62a) elastically deforms following the interaction with a respective deformation portion (64) of said first washer, and **in that**
in the assembled configuration of said actuator, said second portion (62b) being adapted to abut along said drive axle (20) against a respective abutment surface (66) of the first washer (26) and the first portion (62a) is received in a seat (70) following the at least partial elastic return of the same tongue in the assembling step on the first washer, said seat 70 being defined in the tangential direction in order to prevent the relative rotation of cage and first washer around the drive axle (20).

2. The actuator according to claim 1, wherein said deformation portion (b4) comprises a ramp extending essentially in the tangential direction relative to said drive axle (20), and wherein said tongue (62) first portion (62a) deforms upon relative rotation of the cage (56) and of the first washer (26) around said drive axle (20) and/or wherein said ramp is implemented by at least one side surface portion of a tooth (68) of said first washer (26), and/or wherein said tooth (68) comprises two ramps arranged on opposite sides of the tooth relative to a perpendicular radius to the drive axle (20) passing through the middle point of the same tooth and/or wherein said abutment surface (66) is defined by said tooth (68), and/or wherein said abutment surface (66) of the first washer (26) is lowered relative to a base surface (72) of the first washer (26), thus defining a housing (74) to receive said tongue (62) second portion (62b).

3. The actuator according to claim 2, wherein said first washer (26) has a seat (70) adapted to receive said tongue (62) first portion (62a) following the at least partial elastic return of the same tongue, said seat (70) being defined in the tangential direction in order to prevent the relative rotation of the cage (56) and the first washer (26) around said drive axle (20), and/or wherein said abutment surface (66) of tne first washer (26) is lowered relative to a base surface (72) of the first washer (26), thus defining a housing (74) to receive said tongue (62) second portion (62b), and/or wherein said housing (74) is arranged as an extension of said seat (70), in the transversal direction thereto.

4. The actuator according to one of the claims 2 to 3, wherein said first washer has a seat (70) adapted to receive said tongue (62) first portion (62a) following the at least partial elastic return of the same tongue, said seat (70) being defined in the tangential direction in order to prevent the relative rotation of the cage (56) and the first washer (26) around said drive axle (20), said seat (70) being further obtained in said tooth (68) side surface, and/or wherein said abutment surface (66) of the first washer (26) is lowered relative to a base surface (72) of the first washer (26), thus defining a housing (74) to receive said tongue (62) second portion (62b), and/or wherein said housing (74) is arranged as an extension of said seat (70), in the transversal direction thereto.

5. The actuator according to one of the claims 2 to 4, wherein said first washer (26) comprises at least one depression (76) to allow the passage of said tongue (62) along said drive axle (20) when inserting the cage (56) on the first washer (26) along the drive axle (20) direction, and/or wherein said depression (76) is defined on at least one side by said ramp (64).

6. The actuator according to claim 5 when dependant from claim 2, wherein said depression (76) is defined on at least one side by said tooth (68).

7. The actuator according to one of the claims 5 to 6, wherein said second washer (28) comprises at least one depression (78) to allow the passage of said tongue (62) along said drive axle (20) when inserting the cage (56) on the first washer (26).

8. The actuator according to one of the claims 2 to 7, wherein said tongue (62) second portion (62b) is adapted to abut against a respective abutment surface (66) of the first washer (26) upon relative rotation of first washer (26) and cage (56).

9. The actuator according to one of the claims 2 to 8, wherein said second portion (62b) is adapted to abut against a respective abutment surface (66) of the first washer (26) following the at least partial elastic return of said tongue (62).

10. The actuator according to one of the claims 1 to 9, wherein said cage (52) comprises at least two tongues.

11. The actuator according to claim 10 when dependant from claim 6, wherein said first washer (26) comprises at least two depressions (76) alternated with at least two teeth (68).

12. The actuator according to one of the preceding claims, wherein said first washer (26) is constrained to the housing (12) and/or wherein said first washer (26) partially inserts in a seat (32) of the housing (12), co-axial with an actuating shaft (24), and/or wherein said first washer (26) comprises ribs (34) adapted to engage in the wall defining said seat (32).

13. The actuator according to one of the preceding claims, wherein said second washer (28) is operatively associated to the driving member (18) and translatable along the drive axle (20) following the interaction with said first washer (26).

14. The actuator according to claim 1, wherein said cage comprises at least one tongue (62) comprising a first portion (62a) extending along said drive axle (20), in the assembled configuration of said actuator, said first portion (62a) being adapted to essentially elastically deform in the assembling step on the first washer (26) following the interaction with a respective deformation portion (64) of said first washer (26).

15. The actuator according to claim 1, wherein said deformation portion comprises a ramp extending essentially in the axial direction relative to said drive axle and/or wherein at said ramp said first washer has a seat adapted to receive said tongue first portion following the at least partial elastic return of the same tongue, said seat being defined in the tangential direction in order to prevent the relative rotation of cage and first washer around said drive axle and/or wherein said abutment surface of the first washer is lowered relative to a base surface of the first washer, thus defining a housing to receive said tongue second portion and/or wherein said housing is arranged as an extension of said seat, in the transversal direction thereto.

16. The actuator according to the claim 15, wherein said second portion is adapted to abut against a respective abutment surface of the first washer following the at least partial elastic return of said tongue.

17. The actuator according to one of the preceding claims, wherein the cage laterally and frontally wraps first washer (26), second washer (28), and a portion of the pushing device (30), and has an opening (60) which is passed through by a portion of the pushing device (30) and/or wherein the opening (60) and a portion of the pushing device (30) define an anti-rotational coupling implemented by a shape-coupling, and/or wherein said shape-coupling is implemented by a lobed shape of the opening and the pushing device (30) portion.

18. The actuator according to one of the preceding claims, wherein the cage (56) has a cup shape which is adapted to receive the return means (58), at least one portion of the pushing device (30), the second washer (28), and the first washer (26), and wherein an opening (60) is obtained on the basis of such cup shape, in order to allow the passage of said pushing means.

19. The actuator according to one of the preceding claims, wherein said cage (56) comprises at least one tongue (62) comprising:
- a first portion (62a) extending along said drive axle (20), in the assembled configuration of said actuator, said first portion (62a) being adapted to essentially elastically deform when coupling with the first washer (26) following the interaction with a respective deformation portion (64) of said first washer (26),
- a second portion (62b) extending in the essentially transversal direction to said drive axle (20), in the assembled configuration of said actuator, wherein said second portion (62b) is adapted to abut against a respective abutment surface (66) of the first washer (26) and is defined by a free end of the tongue (62) pre-folded towards the drive axle (20).

20. The actuator according to one of the preceding claims, wherein said cage (56) comprises at least one portion pre-folded along an essentially transversal direction to the drive axle (20).

## Patentansprüche

1. Aktuator (10) für eine Feststellbremse, umfassend:
- ein eine Ausnehmung (14) definierendes Gehäuse (12);
- Antriebsmittel (16), welche betriebsmäßig zwischen einem Antriebselement (18) und einem Bremselement angeordnet sind, wobei die Antriebsmittel (16) wenigstens teilweise in der Ausnehmung (12) aufgenommen sind und umfassen: eine erste Distanzscheibe (26), eine zweite, auf die Einwirkung des Antriebselements (18) hin relativ zu der ersten Distanzscheibe (26) entlang einer Antriebswelle (20) verschiebbare Distanzscheibe (28) und eine Drückvorrichtung (30), welche entlang der Antriebswelle (20) auf die relative Bewegung der beiden Distanzscheiben hin verschiebbar ist, wobei die Drückvorrichtung (30) dem Bremselement betriebsmäßig zugeordnet ist;
- einen Käfig (56), der dazu eingerichtet ist, wenigstens teilweise die erste Distanzscheibe (26), die zweite Distanzscheibe (28) und einen Abschnitt der Drückvorrichtung (30) aufzunehmen und ein Widerlager für Rückstellmittel (58) zu definieren, wobei der Käfig (56) Schnappkopplungsabschnitte an die erste Distanzscheibe (26) umfasst, wobei der Käfig (56) wenigstens eine Zunge (62) umfasst, welche umfasst:
- einen ersten Abschnitt (62a), welcher sich in der montierten Konfiguration des Aktuators entlang der Antriebswelle (20) erstreckt, wobei der erste Abschnitt (62a) dazu eingerichtet ist, sich im Wesentlichen elastisch zu verformen, wenn er an die erste Distanzscheibe (26) gekoppelt wird
- einen zweiten Abschnitt (62b), welcher sich in der im Wesentlichen transversalen Richtung zu der Antriebswelle (20) erstreckt,
**dadurch gekennzeichnet, dass**
sich der erste Abschnitt (62a) nach der Wechselwirkung mit einem jeweiligen Verformungsabschnitt (64) der ersten Distanzscheibe elastisch verformt und, dass in der montierten Konfiguration des Aktuators der zweite Abschnitt (62b) dazu eingerichtet ist, entlang der Antriebswelle (20) an eine jeweilige Anlagefläche (66) der ersten Distanzscheibe (26) anzustoßen und der erste Abschnitt (62a) in einem Sitz (70) nach der wenigstens teilweisen elastischen Rückkehr der selben Zunge in dem Montageschritt an der ersten Distanzscheibe aufgenommen wird, wobei der Sitz (70) in der Tangentialrichtung definiert ist, um die relative Drehung von Käfig und erster Distanzscheibe um die Antriebswelle (20) zu verhindern.

2. Aktuator nach Anspruch 1, wobei der Verformungsabschnitt (64) eine Rampe umfasst, welche sich im Wesentlichen in der Tangentialrichtung relativ zu der Antriebswelle (20) erstreckt, und wobei sich der erste Abschnitt (62a) der Zunge (62) auf die relative Drehung des Käfigs (56) und der ersten Distanzscheibe (26) um die Antriebswelle (20) hin verformt oder/und wobei die Rampe durch wenigstens einen Seitenflächenabschnitt eines Zahns (68) der ersten Distanzscheibe (26) implementiert ist oder/und wobei der Zahn (68) zwei Rampen umfasst, welche an gegenüberliegenden Seiten des Zahns relativ zu einem zu der Antriebswelle (20) senkrechten, durch den Mittelpunkt des selben Zahns hindurchgehenden Radius angeordnet sind, oder/und wobei die Anlagefläche (66) durch den Zahn (68) definiert ist oder/und wobei die Anlagefläche (66) der ersten Distanzscheibe (26) relativ zu einer Grundfläche (72) der ersten Distanzscheibe (26) abgesenkt ist, wodurch ein Gehäuse (74) zum Aufnehmen des zweiten Abschnitts (62b) der Zunge (62) definiert ist.

3. Aktuator nach Anspruch 2, wobei die erste Distanzscheibe (26) einen Sitz (70) aufweist, der dazu eingerichtet ist, den ersten Abschnitt (62a) der Zunge (62) aufzunehmen, nach der wenigstens teilweisen elastischen Rückkehr der selben Zunge, wobei der Sitz (70) in der Tangentialrichtung definiert ist, um die relative Drehung des Käfigs (56) und der ersten Distanzscheibe (26) um die Antriebswelle (20) zu verhindern oder/und wobei die Anlagefläche (66) der ersten Distanzscheibe (26) relativ zu einer Grundfläche (72) der ersten Distanzscheibe (26) abgesenkt ist, wodurch ein Gehäuse (74) zum Aufnehmen des zweiten Abschnitts (62b) der Zunge (62) definiert ist oder/und wobei das Gehäuse (74) als eine Verlängerung des Sitzes (70) in der dazu transversalen Richtung angeordnet ist.

4. Aktuator nach einem der Ansprüche 2 bis 3, wobei die erste Distanzscheibe einen Sitz (70) aufweist, der dazu eingerichtet ist, den ersten Abschnitt (62a) der Zunge (62) nach der wenigstens teilweisen elastischen Rückkehr der selben Zunge aufzunehmen, wobei der Sitz (70) in der Tangentialrichtung definiert ist, um die relative Drehung des Käfigs (56) und der ersten Distanzscheibe (26) um die Antriebswelle (20) zu verhindern, wobei der Sitz (70) ferner in der Seitenfläche des Zahns (68) erhalten wird oder/und wobei die Anlagefläche (66) der ersten Distanzscheibe (26) relativ zu einer Grundfläche (72) der ersten Distanzscheibe (26) abgesenkt ist, wodurch ein Gehäuse (74) zum Aufnehmen des zweiten Anschnitts (62b) der Zunge (62) definiert ist oder/und wobei das Gehäuse (74) als eine Verlängerung des Sitzes (70) in der dazu transversalen Richtung angeordnet ist.

5. Aktuator nach einem der Ansprüche 2 bis 4, wobei die erste Distanzscheibe (26) wenigstens eine Vertiefung (76) umfasst, um den Durchgang der Zunge (62) entlang der Antriebswelle (20) zu gestatten, wenn der Käfig (56) an die erste Distanzscheibe (26) entlang der Richtung der Antriebswelle (20) eingesetzt wird oder/und wobei die Vertiefung (76) an wenigstens einer Seite durch die Rampe (64) definiert ist.

6. Aktuator nach Anspruch 5 unter Rückbeziehung auf Anspruch 2, wobei die Vertiefung (76) an wenigstens einer Seite durch den Zahn (68) definiert ist.

7. Aktuator nach einem der Ansprüche 5 bis 6, wobei die zweite Distanzscheibe (28) wenigstens eine Vertiefung (78) umfasst, um den Durchgang der Zunge (62) entlang der Antriebswelle (20) zu gestatten, wenn der Käfig (56) an die erste Distanzscheibe (26) eingesetzt wird.

8. Aktuator nach einem der Ansprüche 2 bis 7, wobei der zweite Abschnitt (62b) der Zunge (62) dazu eingerichtet ist, an eine jeweilige Anlagefläche (66) der ersten Distanzscheibe (26) auf eine relative Drehung der ersten Distanzscheibe (26) und des Käfigs (56) hin anzustoßen.

9. Aktuator nach einem der Ansprüche 2 bis 8, wobei der zweite Abschnitt (62b) dazu eingerichtet ist, an eine jeweilige Anlagefläche (66) der ersten Distanzscheibe (26) nach der wenigstens teilweisen elastischen Rückkehr der Zunge (62) anzustoßen.

10. Aktuator nach einem der Ansprüche 1 bis 9, wobei der Käfig (52) wenigstens zwei Zungen umfasst.

11. Aktuator nach Anspruch 10 unter Rückbeziehung auf Anspruch 6, wobei die erste Distanzscheibe (26) wenigstens zwei Vertiefungen (76) umfasst, die sich mit wenigstens zwei Zähnen (68) abwechseln.

12. Aktuator nach einem der vorhergehenden Ansprüche, wobei die erste Distanzscheibe (26) an dem Gehäuse (12) gehalten ist oder/und wobei die erste Distanzscheibe (26) teilweise in einem Sitz (32) des Gehäuses (12), koaxial mit einer Aktuatorwelle (24) eingefügt ist oder/und wobei die erste Distanzscheibe (26) Rippen (34) umfasst, die dazu eingerichtet sind in die Wand einzugreifen, welche den Sitz (32) definiert.

13. Aktuator nach einem der vorhergehenden Ansprüche, wobei die zweite Distanzscheibe (28) dem Antriebselement (18) betriebsmäßig zugeordnet und nach der Wechselwirkung mit der ersten Distanzscheibe (26) entlang der Antriebswelle (20) verschiebbar ist.

14. Aktuator nach Anspruch 1, wobei der Käfig wenigstens eine Zunge (62) umfasst, welche einen ersten Abschnitt (62a) umfasst, welcher sich in der montierten Konfiguration des Aktuators entlang der Antriebswelle (20) erstreckt, wobei der erste Abschnitt (62a) dazu eingerichtet ist, sich in dem Montageschritt an der ersten Distanzscheibe (26) nach der Wechselwirkung mit einem jeweiligen Verformungsabschnitt (64) der ersten Distanzscheibe (26) elastisch zu verformen.

15. Aktuator nach Anspruch 1, wobei der Verformungsabschnitt eine Rampe umfasst, welche sich im Wesentlichen in der axialen Richtung relativ zu der Antriebswelle erstreckt, oder/und wobei die erste Distanzscheibe an der Rampe einen Sitz aufweist, der dazu eingerichtet ist, den ersten Abschnitt der Zunge nach der wenigstens teilweisen elastischen Rückkehr der selben Zunge aufzunehmen, wobei der Sitz in der Tangentialrichtung definiert ist, um die relative Drehung von Käfig und erster Distanzscheibe um die Antriebswelle zu verhindern oder/und wobei die Anlagefläche der ersten Distanzscheibe relativ zu einer Grundfläche der ersten Distanzscheibe abgesenkt ist, wodurch ein Gehäuse zum Aufnehmen des zweiten Abschnitts der Zunge definiert ist oder/und wobei das Gehäuse als eine Verlängerung des Sitzes in der dazu transversalen Richtung angeordnet ist.

16. Aktuator nach Ansprüche 15, wobei der zweite Abschnitt dazu eingerichtet ist, an eine jeweilige Anlagefläche der ersten Distanzscheibe nach der wenigstens teilweisen elastischen Rückkehr der Zunge anzustoßen.

17. Aktuator nach einem der vorhergehenden Ansprüche, wobei der Käfig die erste Distanzscheibe (26), die zweite Distanzscheibe (28) und einen Abschnitt der Drückvorrichtung (30) lateral und frontal umhüllt und eine Öffnung (60), welche von einem Abschnitt der Drückvorrichtung (30) durchdrungen ist, aufweist oder/und wobei die Öffnung (60) und ein Abschnitt der Drückvorrichtung (30) eine durch eine Formkopplung implementierte Anti-Rotations-Kopplung definieren oder/und wobei die Formkopplung durch eine Nockenform der Öffnung und des Abschnitts der Drückvorrichtung (30) implementiert ist.

18. Aktuator nach einem der vorhergehenden Ansprüche, wobei der Käfig (56) eine Topfform aufweist, welche dazu eingerichtet ist, die Rückstellmittel (58), wenigstens einen Abschnitt der Drückvorrichtung (30), die zweite Distanzscheibe (28) und die erste Distanzscheibe (26) aufzunehmen, und wobei auf der Grundlage einer derartigen Topfform eine Öffnung (60) erhalten wird, um den Durchgang der Drückmittel zu gestatten.

19. Aktuator nach einem der vorhergehenden Ansprüche, wobei der Käfig (56) wenigstens eine Zunge (62) umfasst, welche umfasst:
- einen ersten Abschnitt (62a), welcher sich in der montierten Konfiguration des Aktuators entlang der Antriebswelle (20) erstreckt, wobei der erste Abschnitt (62a) dazu eingerichtet ist, sich im Wesentlichen elastisch zu verformen, wenn er nach der Wechselwirkung mit einem entsprechenden Verformungsabschnitt (64) der ersten Distanzscheibe (26) an die erste Distanzscheibe (26) koppelt,
- einen zweiten Abschnitt (62b), welcher sich in der montierten Konfiguration des Aktuators in der im Wesentlichen transversalen Richtung zu der Antriebswelle (20) erstreckt, wobei der zweite Abschnitt (62b) dazu eingerichtet ist, an eine entsprechende Anlagefläche (66) der ersten Distanzscheibe (26) anzustoßen und von einem freien, in Richtung der Antriebswelle (20) vorgefalzten Ende der Zunge (62) definiert ist.

20. Aktuator nach einem der vorhergehenden Ansprüche, wobei der Käfig (56) wenigstens einen Abschnitt umfasst, welcher entlang einer im Wesentlichen transversalen Richtung zu der Antriebswelle (20) vorgefalzt ist.

## Revendications

1. Actionneur (10) pour frein de stationnement comprenant :
- un logement (12) définissant un renfoncement (14) ;
- des moyens d'entraînement (16) intercalés opérationnellement entre un élément de commande (18) et un élément de freinage, lesdits moyens d'entraînement (16) étant au moins partiellement logés dans ledit renfoncement (12), et comprenant une première rondelle (26), une seconde rondelle (28) pouvant être translatée par rapport à ladite première rondelle (26) le long d'un essieu moteur (20) sous l'action dudit élément d'entraînement (18), et un dispositif de poussée (30) pouvant être translaté le long dudit essieu moteur (20) lors du mouvement relatif desdites deux rondelles, ledit dispositif de poussée (30) étant associé opérationnellement audit élément de freinage ;
- une cage (56) conçue pour loger au moins partiellement la première rondelle (26), la seconde rondelle (28) et une partie du dispositif de poussée (30) et pour définir une butée pour les moyens de retour (58), ladite cage (56) comprenant des parties d'accouplement par encliquetage sur ladite première rondelle (26),
dans lequel ladite cage (56) comprend au moins une languette (62) comprenant :
- une première partie (62a) s'étendant le long dudit essieu moteur (20), dans la configuration assemblée dudit actionneur, ladite première partie (62a) étant conçue pour se déformer essentiellement élastiquement lors de l'accouplement avec la première rondelle (26)
- une seconde partie (62b) s'étendant dans la direction essentiellement transversale par rapport audit essieu moteur (20),
**caractérisé en ce que**
ladite première partie (62a) se déforme élastiquement suite à l'interaction avec une partie de déformation respective (64) de ladite première rondelle, et **en ce que**
dans la configuration assemblée dudit actionneur, ladite seconde partie (62b) est conçue pour venir en butée le long dudit essieu moteur (20) contre une surface de butée respective (66) de la première rondelle (26) et la première partie (62a) est reçue dans un siège (70) suite au retour élastique au moins partiel de la même languette dans l'étape d'assemblage sur la première rondelle, ledit siège 70 étant défini dans la direction tangentielle afin d'empêcher la rotation relative de la cage et de la première rondelle autour de l'essieu moteur (20).

2. Actionneur selon la revendication 1, dans lequel ladite partie de déformation (64) comprend une rampe s'étendant essentiellement dans la direction tangentielle par rapport audit essieu moteur (20), et dans lequel la première partie (62a) de ladite languette (62) se déforme lors de la rotation relative de la cage (56) et de la première rondelle (26) autour dudit essieu moteur (20) et/ou dans lequel ladite rampe est mise en oeuvre par au moins une partie de surface latérale d'une dent (68) de ladite première rondelle (26), et/ou dans lequel ladite dent (68) comprend deux rampes disposées sur des côtés opposés de la dent par rapport à un rayon perpendiculaire à l'essieu moteur (20) passant par le point central de la même dent et/ou dans lequel ladite surface de butée (66) est définie par ladite dent (68), et/ou dans lequel ladite surface de butée (66) de la première rondelle (26) est abaissée par rapport à une surface de base (72) de la première rondelle (26), définissant ainsi un logement (74) pour recevoir la seconde partie (62b) de ladite languette (62).

3. Actionneur selon la revendication 2, dans lequel ladite première rondelle (26) comprend un siège (70) conçu pour recevoir la première partie (62a) de ladite languette (62) suite à l'au moins un retour élastique partiel de la même languette, ledit siège (70) étant défini dans la direction tangentielle afin d'empêcher la rotation relative de la cage (56) et de la première rondelle (26) autour dudit essieu moteur (20), et/ou dans lequel ladite surface de butée (66) de la première rondelle (26) est abaissée par rapport à une surface de base (72) de la première rondelle (26), définissant ainsi un logement (74) pour recevoir la seconde partie (62b) de ladite languette (62), et/ou dans lequel ledit logement (74) est agencé comme un prolongement dudit siège (70), dans la direction transversale à celui-ci.

4. Actionneur selon l'une des revendications 2 à 3, dans lequel ladite première rondelle comprend un siège (70) conçu pour recevoir la première partie (62a) de ladite languette (62a) suite au retour élastique au moins partiel de la même languette, ledit siège (70) étant défini dans la direction tangentielle afin d'empêcher la rotation relative de la cage (56) et de la première rondelle (26) autour dudit essieu moteur (20), ledit siège (70) étant en outre obtenu dans ladite surface latérale de la dent (68), et/ou dans lequel ladite surface de butée (66) de la première rondelle (26) est abaissée par rapport à une surface de base (72) de la première rondelle (26), définissant ainsi un logement (74) pour recevoir la seconde partie (62b) de ladite languette (62), et/ou dans lequel ledit logement (74) est disposé comme un prolongement dudit siège (70), dans la direction transversale à celui-ci.

5. Actionneur selon l'une des revendications 2 à 4, dans lequel ladite première rondelle (26) comprend au moins un creux (76) pour permettre le passage de ladite languette (62) le long dudit essieu d'entraînement (20) lors de l'insertion de la cage (56) sur la première rondelle (26) le long de la direction de l'essieu moteur (20), et/ou dans lequel ledit creux (76) est défini sur au moins un côté par ladite rampe (64).

6. Actionneur selon la revendication 5 lorsqu'elle est subordonnée à la revendication 2, dans lequel ledit creux (76) est défini sur au moins un côté par ladite dent (68).

7. Actionneur selon l'une des revendications 5 à 6, dans lequel ladite seconde rondelle (28) comprend au moins un creux (78) pour permettre le passage de ladite languette (62) le long dudit essieu moteur (20) lors de l'insertion de la cage (56) sur la première rondelle (26).

8. Actionneur selon l'une des revendications 2 à 7, dans lequel la seconde partie (62b) de ladite languette (62) est conçue pour venir en butée contre une surface de butée respective (66) de la première rondelle (26) lors de la rotation relative de la première rondelle (26) et de la cage (56).

9. Actionneur selon l'une des revendications 2 à 8, dans lequel ladite seconde partie (62b) est conçue pour venir en butée contre une surface de butée respective (66) de la première rondelle (26) suite au retour élastique au moins partiel de ladite languette (62).

10. Actionneur selon l'une des revendications 1 à 9, dans lequel ladite cage (52) comprend au moins deux languettes.

11. Actionneur selon la revendication 10 lorsqu'elle est subordonnée à la revendication 6, dans lequel ladite première rondelle (26) comprend au moins deux creux (76) en alternance avec au moins deux dents (68).

12. Actionneur selon l'une des revendications précédentes, dans lequel ladite première rondelle (26) est contrainte sur le logement (12) et/ou dans lequel ladite première rondelle (26) s'insère partiellement dans un siège (32) du logement (12), de manière coaxiale à un arbre d'entraînement (24), et/ou dans lequel ladite première rondelle (26) comprend des nervures (34) conçues pour se mettre en prise dans la paroi définissant ledit siège (32).

13. Actionneur selon l'une des revendications précédentes, dans lequel ladite seconde rondelle (28) est associée opérationnellement à l'élément d'entraînement (18) et peut être translatée le long de l'essieu moteur (20) suite à l'interaction avec ladite première rondelle (26).

14. Actionneur selon la revendication 1, dans lequel ladite cage comprend au moins une languette (62) comprenant une première partie (62a) s'étendant le long dudit essieu moteur (20), dans la configuration assemblée dudit actionneur, ladite première partie (62a) étant conçue pour se déformer essentiellement élastiquement dans l'étape d'assemblage sur la première rondelle (26) suite à l'interaction avec une partie de déformation respective (64) de ladite première rondelle (26).

15. Actionneur selon la revendication 1, dans lequel ladite partie de déformation comprend une rampe s'étendant essentiellement dans la direction axiale par rapport audit essieu moteur et/ou dans lequel au niveau de ladite rampe, ladite première rondelle comprend un siège conçu pour recevoir la première partie de ladite languette suite au retour élastique au moins partiel de la même languette, ledit siège étant défini dans la direction tangentielle afin d'empêcher la rotation relative de la cage et de la première rondelle autour dudit essieu moteur et/ou dans lequel ladite surface de butée de la première rondelle est abaissée par rapport à une surface de base de la première rondelle, définissant ainsi un logement pour recevoir la seconde partie de ladite languette et/ou dans lequel ledit logement est agencé comme un prolongement dudit siège, dans la direction transversale à celui-ci.

16. Actionneur selon la revendication 15, dans lequel ladite seconde partie est conçue pour venir en butée contre une surface de butée respective de la première rondelle suite au retour élastique au moins partiel de ladite languette.

17. Actionneur selon l'une des revendications précédentes, dans lequel la cage enveloppe de façon latérale et frontale la première rondelle (26), la seconde rondelle (28), et une partie du dispositif de poussée (30), et comporte une ouverture (60) qui est traversée par une partie du dispositif de poussée (30) et/ou dans lequel l'ouverture (60) et une partie du dispositif de poussée (30) définissent un accouplement anti-rotation mis en oeuvre par un accouplement de formes, et/ou dans lequel ledit accouplement de formes est mis en oeuvre par une forme lobée de l'ouverture et la partie de dispositif de poussée (30).

18. Actionneur selon l'une des revendications précédentes, dans lequel la cage (56) a une forme de coupelle qui est conçue pour recevoir les moyens de retour (58), au moins une partie du dispositif de poussée (30), la seconde rondelle (28), et la première rondelle (26), et dans lequel une ouverture (60) est obtenue sur la base de ladite forme de coupelle, afin de permettre le passage desdits moyens de poussée.

19. Actionneur selon l'une des revendications précédentes, dans lequel ladite cage (56) comprend au moins une languette (62) comprenant :
- une première partie (62a) s'étendant le long dudit essieu moteur (20), dans la configuration assemblée dudit actionneur, ladite première partie (62a) étant conçue pour se déformer essentiellement élastiquement lors de l'accouplement avec la première rondelle (26) suite à l'interaction avec une partie de déformation respective (64) de ladite première rondelle (26),
- une seconde partie (62b) s'étendant dans la direction essentiellement transversale audit essieu moteur (20), dans la configuration assemblée dudit actionneur, dans lequel ladite seconde partie (62b) est conçue pour venir en butée contre une surface de butée respective (66) de la première rondelle (26) et est définie par une extrémité libre de la languette (62) pré-pliée vers l'essieu moteur (20).

20. Actionneur selon l'une des revendications précédentes, dans lequel ladite cage (56) comprend au moins une partie pré-pliée le long d'une direction essentiellement transversale à l'essieu moteur (20).
